# FASCICULE DE BREVET EUROPEEN

(11) **EP 2 312 978 B1**
(45) Date de publication et mention de la délivrance du brevet: **31.07.2013**
(21) Numéro de dépôt: 10752395.3
(22) Date de dépôt: 16.07.2010
(51) Int. Cl.: A47J 31/36

(54) **DISPOSITIF POUR LA PRÉPARATION D'UNE BOISSON EXTRAITE À PARTIR D'UNE CAPSULE**
VORRICHTUNG ZUR HERSTELLUNG EINES AUS EINER KAPSEL EXTRAHIERTEN GETRÄNKS
DEVICE FOR PREPARING A DRINK EXTRACTED FROM A CAPSULE

(30) Priorité: 23.07.2009 WO PCT/IB2009/053205
(43) Date de publication de la demande: 27.04.2011
(60) Demande divisionnaire: 13170004.9
(73) Titulaire: Ethical Coffee Company SA, 1700 Fribourg (CH)
(72) Inventeur: MARILLER, Alain, 1801 Le Mont-Pèlerin (CH)
(74) Mandataire: Grosfillier, Philippe
(86) Numéro de dépôt international: PCT/IB2010/053256
(87) Numéro de publication internationale: WO 2011/010262

(56) Documents cités:
- EP-A1- 1 295 554
- EP-A1- 1 500 357
- WO-A1-2009/090201
- US-A1- 2003 056 661

## Description

### Domaine de l'invention

La présente invention se situe dans le domaine de la préparation de boissons, p.ex. à base de café, par extraction d'une dose concentrée, p.ex. de café moulu, contenue dans une capsule. Elle se rapporte plus particulièrement aux dispositifs utilisant de telles capsules.

### Etat de la technique

Des capsules et des machines fonctionnant selon le principe précité existent depuis de nombreuses décennies.

Les brevets US 2 899 886, US 2 968 560, US 3 403 617 et US 3 607 297 décrivent des dispositifs où la capsule est initialement perforée en plusieurs endroits, puis traversée par de l'eau sous pression.

La capsule décrite dans le brevet CH 605 293 ou dans le brevet EP 0 242 556 B1 comporte une membrane dans sa partie inférieure. De l'eau sous pression est initialement introduite dans la partie supérieure de la capsule, ce qui entraîne un gonflement de la capsule, principalement au niveau de la membrane. A partir d'une certaine pression, la membrane se déchire, autorisant de la sorte l'écoulement d'un mélange eau-café.

D'autres capsules munies d'une membrane sont décrites dans les documents brevets suivants : EP 0 468 079 A, EP 0 806 373 A, EP 0 554 469 A.

### Exposé général de l'invention

La présente invention vise à éviter l'utilisation de capsules constituées d'un matériau déformable au contact d'eau chaude. Ce type de matériau peut en effet induire des disfonctionnements dans certains dispositifs.

L'invention a donc comme objet un dispositif et un procédé pour la préparation d'une boisson tels que définis dans les revendications.

Selon un mode de réalisation la paroi interne de la cage comprend un évidement dans lequel est logé un élément déformable dont le coefficient de rigidité est supérieur au coefficient de rigidité du matériau constituant la capsule.

L'évidement peut avoir la forme d'une gorge annulaire, d'un ou plusieurs trous.

Selon un autre mode de réalisation la paroi interne de la cage comporte des éléments pivotants de type palette qui sont adaptés de manière à être intégralement logés dans la paroi de la cage si le coefficient de rigidité de la capsule est supérieur à une valeur déterminée et à émerger au moins partiellement de ladite paroi dans le cas contraire.

Selon un mode de réalisation de l'invention la paroi interne de la cage comprend un relief de type harpon.

### Exposé détaillé de l'invention

L'invention est décrite plus en détail ci-après au moyen d'exemples non limitatifs illustrés par les figures suivantes :

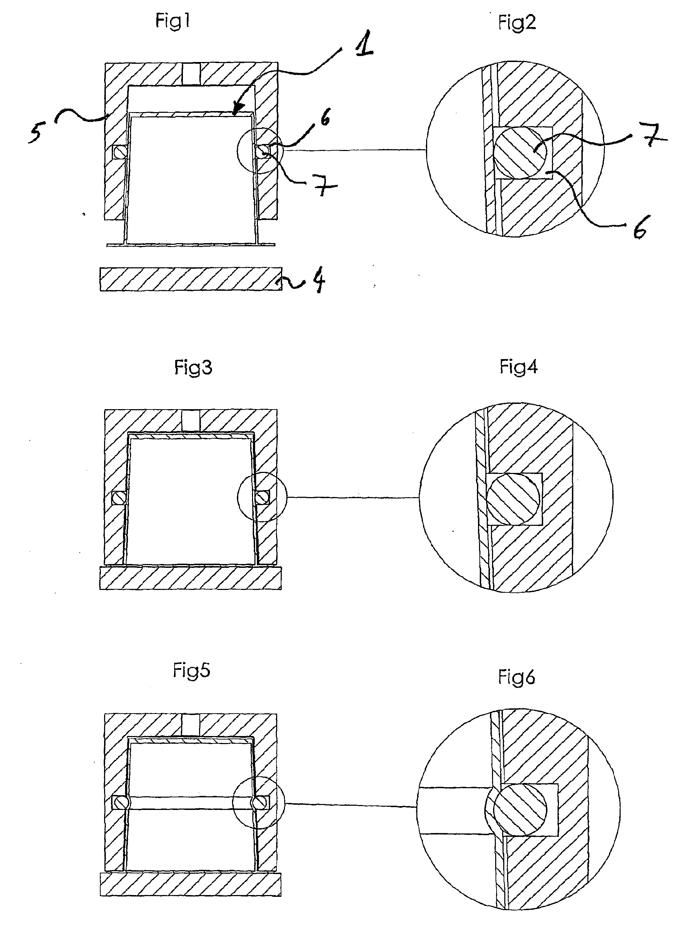

Les figures 1 à 6 montrent un exemple de dispositif dans lequel la paroi interne de la cage 5 comporte un évidement 6 en forme de gorge annulaire, l'intérieur de l'évidement 6 étant occupé par un élément légèrement déformable 7, p.ex. un O-ring ou un ressort, qui en se laissant un peu comprimer, autorise l'insertion d'une capsule rigide dans la cage 5, cela sans que la capsule 1 se déforme. Si la capsule 1 se ramollit consécutivement à sa mise en contact avec de l'eau chaude (voir figures 5 et 6), la paroi latérale de la capsule 1 est déformée au niveau de l'évidement 6. Une fois l'eau chaude évacuée, la capsule 1 se rigidifie et reste bloquée dans la cage 5, rendant de la sorte le dispositif inopérant.
   Il convient de relever que l'élément légèrement déformable 7 doit être adapté de manière à exercer une certaine force en direction du centre de la cage 5.

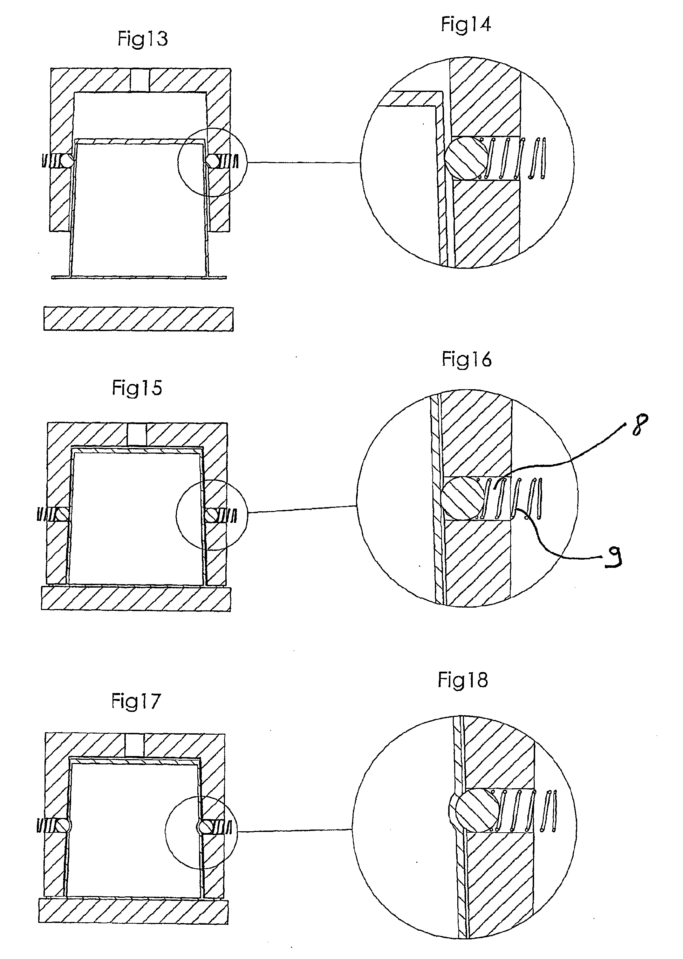

La variante illustrée sur les figures 13 à 18 fonctionne de manière similaire à celle des figures 1 à 6. Elle diffère seulement par le fait que l'évidement se présente sous forme d'au moins un trou cylindrique 8 dans lequel est disposé un ressort 9. De préférence, on utilise plusieurs trous 8 répartis autour de la capsule 1.

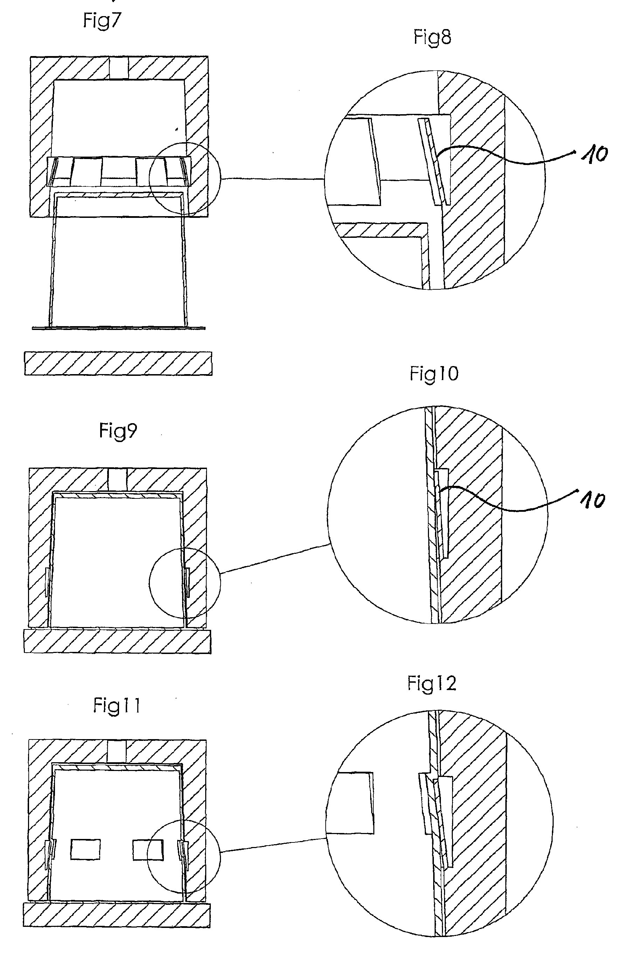

La variante présentée sur les figures 7 à 12 présente également une cage 5 avec un ou plusieurs évidements. Dans ce cas par contre, l'élément déformant a la forme d'une palette 10 pivotant autour d'un axe horizontal. Lorsque la capsule 1 est insérée dans la cage, la palette 10 est logée intégralement dans son évidement. Une fois la capsule 1 ramollie, chaque palette 10 s'incruste dans la paroi de la capsule 1. La géométrie des palettes 10 a pour effet d'induire un effet harpon. Comme on peut le voir sur les figures 11 et 12, la capsule 1 est retenue dans la cage 5.

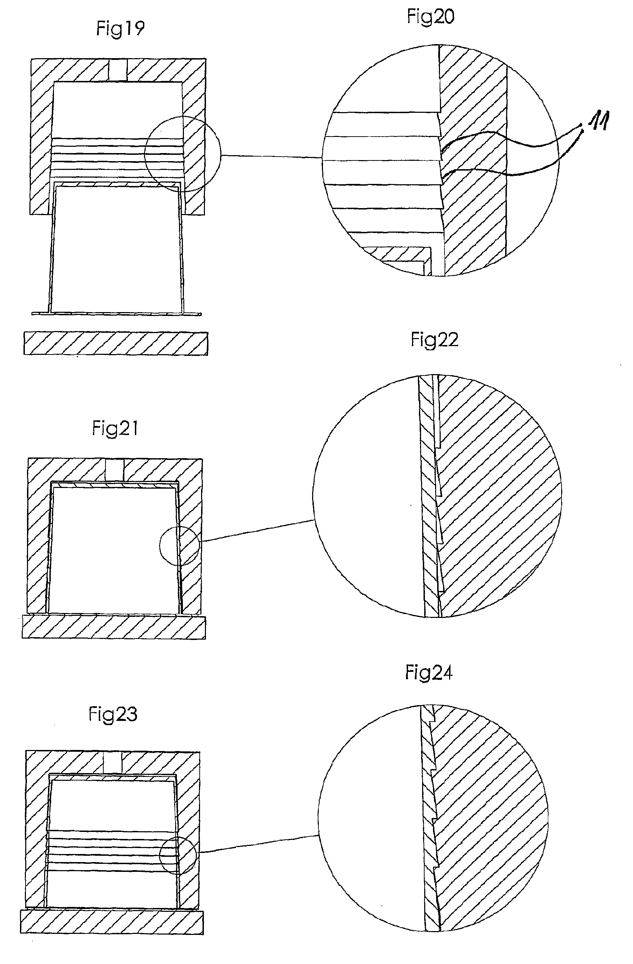

Le mode de réalisation de l'invention des figures 19 à 24 se caractérise par une paroi interne de cage 5 qui comporte un relief dentelé en forme de harpon 11. Lorsque la capsule 1 se ramollit, une partie de sa matière se loge entre les dents de la cage 5, retenant de la sorte la capsule 1 dans la cage 5.

Il va de soi que l'invention ne limite aux exemples illustrés dans les figures.

## Revendications

1. Dispositif pour la préparation d'une boisson extraite à partir d'une capsule (1) comprenant un support de capsule (4) et une cage à capsule (5) à l'intérieur de laquelle sont disposés au moins une entrée d'eau et des moyens de perçage de capsule,
**caractérisé par le fait que** ladite cage (5) est dimensionnée de manière à déformer par des moyens déformants compris sur la paroi interne de la cage au moins partiellement toute capsule (1), constituée d'un matériau déformable au contact d'eau chaude, qui est disposée dans la cage (5), de manière à ce que la capsule (1) soit retenue dans la cage (5) consécutivement à son contact avec de l'eau chaude, lesdits moyens étant un relief de type harpon (11).

2. Procédé d'extraction d'une boisson utilisant un dispositif selon la revendication précédente, dans lequel pour une capsule constituée d'un matériau déformable au contact d'eau chaude, ladite capsule disposée dans la cage est retenue dans ladite cage consécutivement à son contact avec de l'eau chaude lorsqu'elle se ramollit et qu'une partie de sa matière se loge entre les dents de la cage.

## Patentansprüche

1. Vorrichtung für die Zubereitung eines aus einer Kapsel (1) extrahierten Getränks, die eine Kapselstütze (4) und einen Kapselkäfig (5), in dem mindestens ein Wassereinlass und Kapseldurchlochungsmittel angeordnet sind, umfasst,
**dadurch gekennzeichnet, dass** der Käfig (5) dazu bemessen ist, durch an der Innenwand des Käfigs angeordnete Verformungsmittel jede Kapsel (1) zumindest teilweise zu verformen, wobei die Kapsel aus einem Material besteht, das bei Kontakt mit heißem Wasser verformbar ist, und so in dem Käfig (5) angeordnet ist, dass die Kapsel (1) nach ihrem Kontakt mit dem heißen Wasser in dem Käfig (5) festgehalten wird, wobei die Mittel eine Strukturierung nach Art einer Harpune (11) sind.

2. Verfahren zum Extrahieren eines Getränks unter Verwendung einer Vorrichtung nach dem vorherigen Anspruch, wobei für eine aus einem bei Kontakt mit heißem Wasser verformbaren Material hergestellte Kapsel die in dem Käfig angeordnete Kapsel nach ihrem Kontakt mit heißem Wasser in dem Käfig festgehalten wird, wenn sie erweicht und ein Teil ihres Materials zwischen den Zähnen des Käfigs aufgenommen ist.

## Claims

1. Device for preparing a drink extracted from a capsule (1) comprising a capsule support (4) and a capsule cage (5) inside which there are at least a water inlet and capsule-piercing means, **characterized in that** said cage (5) is sized in such a way as to deform, at least partially, using deforming means included on the internal wall of the cage, any capsule (1), made of a material that can be deformed upon contact with hot water, which is placed in the cage (5), so that the capsule (1) is retained in the cage (5) following its contact with hot water, said means being a relief of the barbed hook (11) type.

2. Method for extracting a drink using a device according to the preceding claim, in which, for a capsule made of a material that can be deformed upon contact with hot water, the said capsule, placed in the cage, is retained in the said cage after it has come into contact with hot water and softened, with some of its material having become lodged between the teeth of the cage.
